# EUROPEAN PATENT SPECIFICATION

(11) **EP 1 928 261 B1**
(45) Date of publication and mention of the grant of the patent: **10.11.2010**
(21) Application number: 06793807.6
(22) Date of filing: 25.09.2006
(51) Int. Cl.: A23K 1/18, A01K 61/00

(54) **Method and receptacle to enhance hatching percentage of artemia diapauzing cysts**
Verfahren und Behälter zur Verbesserung der Schlüpfrate von Artemia-Diapausezysten
Méthode et récipient pour augmenter le pourcentage d'éclosion de kystes d'artemia en diapause

(30) Priority: 26.09.2005 EP 05108886
(43) Date of publication of application: 11.06.2008
(73) Proprietor: INVE Technologies NV, 9200 Dendermonde (BE)
(72) Inventor: VAN NIEUWENHOVE, Luciaan, Alex, Johan, Nonthaburi, 11120 (TH); NAESSENS-FOUCQUAERT, Eddy, B-9840 De Pinte (BE); ROMBAUT, Geert, B-9290 Berlare (BE)
(74) Representative: Van Reet, Joseph
(86) International application number: PCT/EP2006/066700
(87) International publication number: WO 2007/039508

(56) References cited:
- EP-A- 1 195 088
- EP-A- 1 433 380
- WO-A-96/12407
- WO-A-2004/091307
- US-A- 4 593 647
- DATABASE WPI Section Ch, Week 200064 Derwent Publications Ltd., London, GB; Class C06, AN 2000-662986 XP002368301 -& RU 2 150 196 C1 (SOKOLOV A YU) 10 June 2000 (2000-06-10)

## Description

The present invention relates to a method to hatch Artemia nauplii starting from an amount of cysts of one or more Artemia species, including diapauzing cysts, by incubating the cysts in a hatching medium under conditions allowing at least a portion of the cysts to hatch and to release free swimming nauplii within a predetermined incubation period, in which method the cysts are brought in contact with a compound to break diapause in at least a number of said diapauzing cysts in order to enable them to produce free swimming nauplii within said predetermined incubation period thereby increasing the hatching percentage of the incubated cysts from X % of the total number of full cysts when the cysts are not brought in contact with said compound to a hatching percentage higher than X % when they are brought in contact with said compound.

Artemia nauplii are commonly used as live food organisms in aquaculture, more particularly as live food for the early larval stages of marine fish and shrimp. The Artemia nauplii as live food are not marketed as such but as Artemia cysts out of which the nauplii can be hatched. There are different species of Artemia which may produce cysts, such as *Artemia franciscana, Artemia persimilis, Artemia urmiana, Artemia tunisian, Artemia tibetiana, Artemia sinica* and *Artemia parthogenetica.*

In the encysted embryos or cysts of Artemia the animal's embryonic development is halted (or enters diapauze) at the gastrula stage. As such released by the female into the aquatic environment these diapauzing or dormant embryos will not further develop into free swimming nauplii when subjected to otherwise hatching promoting environmental conditions. Development will only resume when the diapauze controlling mechanisms are de-activated by external stimuli. In the natural environment cold shock (hibernation) and dehydration are known to terminate the diapauze. The thus activated (or quiescent) embryo can resume development when incubation conditions permit.

Diapauzing as well as quiescent cysts can survive long periods of dehydration and anoxia, extreme temperatures and pressure. In the natural environment such resistance is a survival strategy of the species since cysts are often temporarily the only living stage of the animal in a given biotope. Outside their natural environment, when sufficiently dehydrated and properly stored i.e. in a dry environment, preferably at low temperatures and away from light and oxygen, the cysts remain viable for a considerable period of time (several years). This property of prolonged storability and consequent year-round off-the-shelf availability, together with the short incubation time needed to produce the free swimming nauplii makes them the most convenient, least labour-intensive source of live food for aquaculture (Van Stappen, 1996).

Artemia cysts for later aquaculture applications are collected from the natural environment. In such harvested raw product quiescent and diapauzing cysts are present in varying proportions. The dry, ready to use commercial product is obtained after the application of a series of processing and conditioning procedures. In the processing the raw product is purified (removal of debris), washed (removal of salt) and finally dried. Standard conditioning techniques typically try to copy natural conditions of hibernation (storage in cooled warehouses) and/or desiccation (drying with heated air as part of the processing procedures) and mostly result in the de-activation of the diapauze mechanism in virtually all of the individual cysts.

However, many times the hatchability of processed cysts remains poor since the embryo's are not able to proceed to the stage of the free swimming nauplius.

Hatchability is measured as H%, Heff or Houtput and takes into account the final result of the hatching process i.e. the free-swimming nauplius. The hatching percentage (H%) is the number of free swimming nauplii that emerge from 100 full cysts, the hatching efficiency (Heff) is the number of free swimming nauplii that hatch out of one gram of cyst product and the hatching output (Houtput) is the weight of free swimming nauplii that hatch out of one gram of cyst product.

The reasons for which embryo's are sometimes unable to proceed to the stage of the swimming nauplius are mostly related to inadequate incubation conditions. However, factors inherent to the cysts may also cause this problem (e.g.: insufficient amount of stored energy). Further more, in some Artemia strains or in some batches within the same strain a more or less large number of embryo's, although viable, are not able to start the hatching procedure. For such strains or batches the till that moment applied processes or conditioning techniques have obviously failed to de-activate the diapauze in all of the individual cysts and in order to obtain the maximal number of free swimming nauplii, supplementary and more specific diapauze deactivating procedures will be necessary (Van Stappen, 1996).

Described procedures include a.o. prolonged cold storage of dried cysts, repeated hydration-dehydration cycles, short time incubation in a solution of specific chemicals (e.g. hydrogen peroxide). These techniques are strain and batch specific and moreover, the cysts frequently respond in an erratic way. When not properly executed even adverse results are obtained (e.g. incubation in chemical solutions under inadequate time-dose combinations). These techniques are to be applied in addition and after the processing techniques that till that moment had been applied, i.e. by the user of the cysts. They require from the latter a lot of work, skill and sufficient general Artemia background knowledge as well as specific information about the particular strain or batch to be treated. Absence of this will be the origin of mistakes and/or undesirable results. The user-unfriendly nature of these specific, supplementary diapauze de-activating techniques eliminates one of the main advantages of Artemia cysts: a source of readily available fresh food for aquaculture.

A method which enables to treat cysts to increase the hatching percentage thereof without requiring much process steps is disclosed by EP1195088. In this process, hydrogen peroxide is introduced in the hatching medium in an amount selected within the range between 0.5 and 30 mg/l hatching medium wherein the cysts are incubated in a density of maximally about 5g cyst dry matter per litre to increase the hatching percentage from X% of the total number of full cysts when the cysts are not brought in contact with hydrogen peroxide to a value higher than X% when they are brought in contact with hydrogen peroxide.

A drawback of this method is that the hatching in this method depends on the amount of peroxide. More particularly an amount between 0.5 and 30 mg/l, is needed to be introduced in the hatching medium to allow to break diapause in at least a number of the diapauzing Artemia cysts in order to enable such diapauzing cysts to produce free swimming nauplii within the incubation period. At peroxide concentrations lower than the range of optimal peroxide concentration, the hatching does not reach its maximal value, at peroxide concentrations above the range of optimal peroxide concentration the peroxide is toxic to the nauplii and this is reflected in a hatching lower then the maximal value. This range of optimal concentrations is very small and since it also depends on the strain or batch of Artemia, it is therefore necessary to determine by standardized tests the range of optimum peroxide concentrations for each batch or strain before the hydrogen peroxide dosage can be calculated. The determination of this optimum range is a time consuming work, that when not carefully executed can lower hatching percentages.

An object of the present invention is therefore to provide a alternative method to increase the hatching percentage of Artemia cysts without the limitation of a narrow range of optimal concentrations that allow the maximal hatching percentage.

To this end, according to claim 1 and 14, the cysts are brought in contact with at least one compound comprising at least one -(OH)C=C(OH)- structure to break diapause in at least a number of the diapauzing cysts in order to enable them to produce free swimming nauplii thereby increasing the hatching percentage from X % of the total number of full cysts when the cysts are not brought in contact with said compound to a value higher than X % when they are brought in contact with said compound.

The present inventors have found that bringing the cysts in contact with said compound, and more particularly the introduction of said compound in the hatching medium, enables to break diapause in at least a number of diapauzing cysts and thus to increase the hatching percentage. Surprisingly, in this new method the maximal hatching was obtained within a quite large range of concentrations of said compounds contrary to the method described in EP1195088 where maximal hatching was only possible in a narrow range of hydrogen peroxide or hydrogen peroxide producing compounds.

An important advantage of this feature is that when the range of optimal concentrations is determined, it is not that critical to stay close to this optimal concentration. Lethal effects on the Artemia will not often occur, even when the minimal dose of said compounds for optimal results is doubled or tripled.

Another important advantage is that compounds comprising at least one -(OH)C=C(OH)- structure are less aggressive (less oxidative, less flammable) compared to peroxides or the peroxide producing compounds specified in EP1195088, which is less harmful for the labourers in the production facilities of processed cysts or for the farmers, using the cysts.

The invention also relates to a receptacle containing an amount of cysts of one or more Artemia species, according to claim 8, which cysts are destined to be incubated in a hatching medium to produce free swimming nauplii, and show a hatching percentage of X% of the total number of full cysts when they are hatched in the hatching medium in the absence of a compound which comprises at least one -(OH)C=C(OH)- structure. The receptacle according to the invention is characterised in that it contains, in addition to said cysts, an amount of at least one compound which comprises at least one -(OH)C=C(OH)- structure, which amount is sufficient to increase the hatching percentage of the cysts from X% to a hatching percentage higher than X% when this amount of said compound is introduced in the hatching medium.

The advantage of using one or more compounds comprising at least one -(OH)C=C(OH)- structure instead of hydrogen peroxide or the peroxide producing compounds mentioned in EP1195088 is that the effect on the hatching percentage is less dependent on the amount thereof. Moreover, these specific compounds can be easier dissolved in water without losing its specific activity to enhance the hatching percentage. As a result, they can be more easily brought (coated) on the cysts.

A further advantage is that said compounds adhered to the cysts, still have their specific activity to enhance the hatching percentage when densities of cysts are lower or higher than the usual densities used in common practises.

Another advantage is that when said compounds are introduced in the hatching medium, the bacterial counts on TCBS-Agar is simultaneously suppressed without harming the free swimming Artemia nauplii during or after hatching.

WO 2004/091307 discloses the use of an antibacterial combination which contains bioactive polyphenols, in particular Vitis vinifera leaves extract, to improve the survival rate of Artemia nauplii by supplying these bioactive polyphenols to the Artemia nauplii which are being enriched in an enrichment tank. In contrast to the method according to the present invention, the bioactive polyphenols are not added to the hatching medium and can thus have no effect on the hatching rate of the cysts.

Other particularities and advantages of the invention will become apparent from the following description of some particular embodiments of the hatching method and of the cysts packaged in a receptacle according to the present invention. In this description, reference is made to the annexed drawings therein.

In the figures data are given for a commercial available green tea extract containing minimum 98% polyphenols of which at least 50% contained epigallocatechin gallate. This commercial compound is referred to 'EGCG' and the dosage is calculated on mg compound/I or ppm.
Figure 1 is a graph showing the dose related effect of hydrogen peroxide and EGCG added to the hatching medium on the hatching of Artemia cysts including diapauzing cysts. The hatching percentage calculated as the number of hatched nauplii on the total number of nauplii plus umbrellas plus embryos to hatch is referred to H-. The hatching percentage calculated as the number of hatched nauplii plus umbrellas on the total number of nauplii plus umbrellas plus embryos is referred to H+.
Figure 2 is a graph showing the variability of the optimum dose of EGCG between different batches of Artemia cysts including diapauzing cysts.
Figure 3 is a graph showing the effect of the cyst density in the hatching medium on the hatching percentage when EGCG is introduced in the hatching medium versus when it is coated on the cysts, more particularly in an amount of 8 mg of EGCG per gram cysts.
Figure 4 is a graph showing the microbial counts on Marine Agar (MA) and on TCBS-Agar, 24 hours after introducing 30 mg EGCG /I in the hatching medium.

The present invention generally relates to a method for producing free swimming Artemia nauplii starting from Artemia cysts containing a number of diapauzing cysts. Just like in the conventional hatching methods, the cysts are incubated in a hatching medium under conditions allowing the cysts to hatch and to release free swimming nauplii, usually but not necessarily, within an incubation period of one day (24 hours). The incubation period starts when the dried cysts or the cysts which are stored in brine (wet cysts) are added to a hatching medium which contains at least water, i.e. when the cysts start to hydrate. Since the composition of the hatching medium and the optimal hatching conditions are generally known by the skilled person and described in the literature, in particular in Van Stappen (1996) as mentioned hereabove, no further description need to be given here of this composition and these conditions. It should be noted however that the cysts can also be hatched under conditions which differ somewhat from the optimal conditions. The cysts may for example be hatched at a temperature of less or more than 28 °C, for example at a temperature of about 30 °C or in a hatching medium containing less or more than 35 g/I of dissolved salts. Although a cyst density of about 2 g/I or somewhat less is preferred under practical conditions, the cyst density may also be lower or higher than 2 g/l. Usually the cyst density will however be lower than 10 g/I or even lower than 5 g/l.

An essential feature of the method according to the invention is that the cysts are brought into contact with at least one hatching enhancing compound which comprises at least one -(OH)C=C(OH)- structure, in particular by introducing this hatching enhancing compound in the hatching medium, to break diapause in at least a number of the diapauzing Artemia cysts in order to enable also such diapauzing cysts to produce free swimming nauplii. In case the cysts contain a portion of diapauzing cysts, the hatching percentage is increased from X % of the total number of full cysts, when the cysts are hatched in the hatching medium wherein no said compounds have been introduced, to a hatching percentage higher than X % when they are hatched in the hatching medium containing said compounds. It will be clear that in the method according to the invention at least a portion of the diapauzing cysts will hatch but not necessarily all the diapauzing cysts which are added to the hatching medium, although it is preferred that as much as possible of the diapauzing cysts will hatch.

A consequence of a higher hatching percentage in cysts is that when more cysts hatch, more substrate for heterotrophic marine bacteria is released in the hatching medium. Surprisingly, when hatching of cysts is increased by introducing said compound in the hatching medium, the growth of bacteria (mainly Vibrios) is simultaneously suppressed by the same compound in the hatching medium.

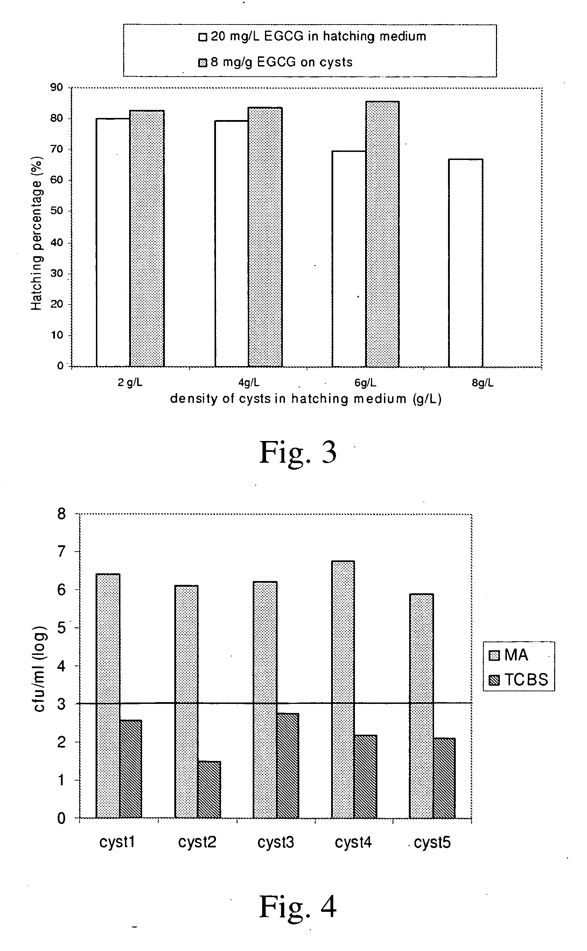

Figure 4 shows the bacterial counts on Marine Agar and TCBS (thiosulphate citrate bile salt sucrose agar) of the hatching medium of five different strains (cyst1 to cyst5) of cysts of which at least some are in diapause, which were brought in contact with different concentrations of EGCG, said concentrations chosen in the range that is effective to break diapause in a maximum number of cysts of the specific strain. Bacterial numbers on TCBS (mainly Vibrios) in the hatching medium without the use of the hatching enhancing compounds comprising at least one -(OH)C=C(OH)- structure, are usually higher than 10⁶ CFU / ml after 24 hours of incubation. Surprisingly, when cysts are incubated with EGCG, the amount of Vibrio in the hatching medium is significantly reduced (2-4 log units compared to the control) after 24 hours of incubation.

In the method according to the invention, the amount of compounds containing at least one -(OH)C=C(OH)- structure to introduce in the hatching medium, is preferably at least 1 mg/l and more preferably at least 3 mg/l. Best results are obtained when an amount of at least 5 mg compound /l hatching medium is used and most preferably of at least 10 mg compound /l hatching medium. Said amount is to be calculated on the total sum of all different compounds containing at least one -(QH)C=C(OH)- structure, which are introduced in the hatching medium and which enhance the hatching, since in practise some of the products containing said compounds that can be used to increase hatching percentage, comprise a mixture of more than one of said compounds.

The compounds comprising at least one -(OH)C=C(OH)-structure may be introduced in the hatching medium at the beginning of the incubation period, in particular by introducing said compounds in the hatching medium when adding the cysts thereto. As explained hereinafter, this will be the case when said compounds are mixed with the dried cysts. The compounds comprising at least one -(OH)C=C(OH)-structure may also be introduced in the hatching medium before adding the cysts thereto. In that case, the amount of said compounds introduced in the hatching medium is to be understood the amount of said compounds present therein when adding the cysts thereto since, after the addition of said compounds, a portion thereof may have been reacted away.

When the compound or compounds comprising at least one -(OH)C=C(OH)- structure are not introduced simultaneously with the cysts in the hatching medium, they are introduced therein preferably less than 10 hours, and more preferably less than 8 hours, after the start of the incubation period. The best effects on the hatching percentage are achieved when the said compounds are introduced in the hatching medium less than 6 hours and especially less than 5 hours after the start of the incubation period. It will be clear that the total amount of said compounds do not have to be introduced at once in the hatching medium but that it can be introduced therein in several times.

The amount of compounds comprising at least one -(OH)C=C(OH)- structure which is to be introduced according to the invention in the hatching medium in order to obtain the maximum hatching percentages depends from strain to strain or batch to batch of the cysts. It depends among others from the number of diapauzing cysts and especially also from the depth of diapause, i.e. from the diapauzing stage. However, in contrast with the prior art method, in which hydrogen peroxide was used (EP1195088), the range in which the maximum hatching percentage can be reached is much larger so that at least double or triple amounts can be used without any toxic effects on the Artemia nauplii. Moreover, the maximum hatching percentage value is usually even higher than in the method in which hydrogen peroxide is used.

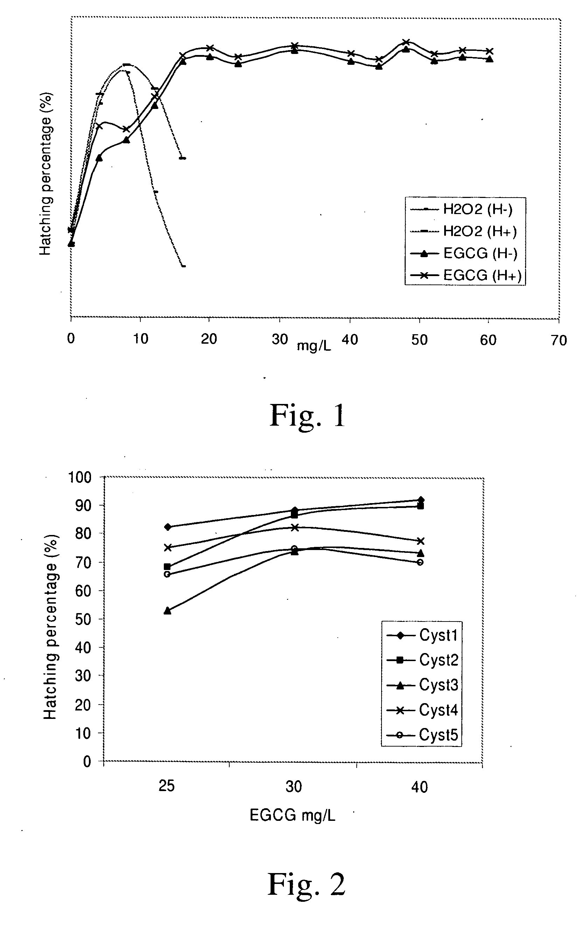

The dose effect of EPGC on the hatching percentage (H+ and H-) versus the dose effect of hydrogen peroxide, is illustrated in Figure 1. In this example, a series of 1 litre cones was used in which 2 g of Artemia cysts, including diapauzing cysts (moisture content: 7.5%) of a same batch were incubated in artificial seawater (25 g/l). The temperature of the water in the cones was kept constant around 30 °C, the water was constantly aerated and illuminated. Different doses of EGCG and hydrogen peroxide (H₂O₂) were added to the hatching medium at the start of the incubation of the cysts. Each treatment was done in triplicate with the treatment's result being the average of the triplicates. From Figure 1 it appears that, in this example, the addition of hydrogen peroxide at 8 mg/L gave the maximum hatching percentage of 78.9%, the maximum hatching percentage for EGCG appeared to be 83.8%. More important, at a concentration of 9 mg peroxides /L, the hatching percentage already decreases considerably. The difference between H- and H+ that appears with a dosage of hydrogen peroxides higher than 8 mg/L demonstrates the toxic effect on the free swimming nauplii. This toxic effect does not appear in the curves of EGCG. At concentrations of 16 mg EGCG /L, the hatching percentage appears to be more than 80% and this stays above 80% even when at least double (40 mg/L) or at least triple (60 mg/L) amounts of EGCG are introduced. The margin for the dose is much broader as it is for hydrogen peroxides, which practically implies that when the process is up-scaled to commercial practices, there will be less risk for over-dosage.

In Figure 2 three different dosages of EGCG are applied in the same experimental conditions as described for Figure 1 for five different strains or batches of Artemia cysts. The maximal hatching percentages differ from strain to strain or batch to batch, but when a dose of for example 30 mg EGCG / L is applied to all the batches without determining the specific concentration for the maximal hatching percentage for each of these batches, still the applied dose had no toxic effect to any of these batches. It is thus not essential to determine the optimal range to get the maximum hatching percentage for each batch or strain of the cysts, but preferably, at least the lower limit of the concentration above which the corresponding hatching percentage is close to the maximum hatching percentage is determined.

In the method according to the invention, use can be made of products comprising a hatching enhancing compound which comprises at least one -(OH)C=C(OH)- structure or a mixture of more than one of such hatching enhancing compounds. The -(OH)C=C(OH)- structure in the hatching enhancing compounds is preferably a part of an aromatic substructure of said compound. More preferably the hatching enhancing compound is selected from the groups containing polyphenols and / or flavonoids, more preferably those polyphenols and / or flavonoids containing a catechol and / or gallol structure (catechol structure or group: -C₆H₅O₂; gallol structure or group: -C₆H₅O₃).

Examples of such products are commercial available products like green tea extracts, Acacia catechu extract, grape seed extract etc. These products often contain a mixture of different polyphenols and / or flavonoids in a high percentage.

Polyphenols and flavonoids comprise a large group of secondary plant metabolites. Presently more than 5000 individual compounds are known, which are based on very few core structures. Their multitude derives mainly from the various hydroxylation patterns (up to six hydroxyl groups) and ether substitution by simple methylation or diverse mono- and di-saccharides. Proanthocyanidins mostly occur in green tea (*Camillia sinensis*), grape seeds and skin (*Vitis vinifera*), or cacao *(Theobroma cacao).*

Especially polyphenols and / or flavonoids containing catechol and / or gallol structures make good candidates to enhance the hatching percentage of diapausing cysts. Examples of this group are: catechol, pyrogallol, pyrocatechol, propyl gallate, lauryl gallate, octyl gallate, methyl catechol, propyl catechol, dihydroxybenzaldehyde, ellagic acid hydrate, dopamine HCl, DL-Isoproterenol sulphate dehydrate, gallacetophenone, rosmarinic acid, benzenetriol and specificially belonging to the group of flavonoids: the group of flavonones like for example: luteolin; the group of flavonols like for example: quercetin, fisetin, myricetin; the group of flavanonols like for example: taxifolin; the group of flavan-3-ols like for example: catechin, epicatechin, epigallocatechin, epicatechin gallate, epigallocatechin gallate and other like cyanidin.

In fact, most flavonoids or polyphenols containing at least one aromatic substructure in the form of a catechol or gallol, are good candidates to enhance the hatching percentage in diapauzing cysts. An overview of flavonoids is to find in the review by Pietta (2000), which is incorporated herein by reference.

In practise a product, mostly a commercial available product, is used that contains a mixture of the compounds mentioned here above. Nevertheless, products comprising no more than one said compound are also available.

The maximum hatching percentage (M%) of the cysts can be determined by taking a number of samples of the cysts and by hatching these samples under substantially identical conditions (same temperature, salt content, cyst density, etc.), only differing from one another by different amounts of one or more selected hatching enhancing compounds comprising at least one -(OH)C=C(OH)- structure, introduced per volume unit therein. Subsequently, the hatching percentages can be determined for the different amounts which gives the possible increase in the hatching percentage, in particular the optimal amount which gives the highest hatching percentage M %, can be selected. Instead of selecting the amount which gives the maximum hatching percentage of M %, it is also possible to select an amount which gives a smaller hatching percentage, in particular a hatching percentage which is at least equal to X % + 0.4*(M - X) % (X % = hatching percentage when no hatching enhancing compound is added) and preferably at least equal to X % + 0.6*(M - X) %, an amount corresponding substantially to said amount which gives said maximum hatching percentage of M % being most preferably selected.

In the following example, maximum hatching percentage was achieved on the next products comprising no more than one different compound comprising at least one -(OH)C=C(OH)- structure at the following concentrations :

| | |
|---|---|
| pyrocatechol : | 14 ppm in the hatching medium |
| pyrogallol: | 14 ppm in the hatching medium |
| quercetin: | 30 ppm in the hatching medium |
| methylcatechol: | 15 ppm in the hatching medium |
| propyl gallate: | 40 ppm in the hatching medium |

The cysts which are destined to be used in the method according to the present invention are cysts of one or more Artemia species. When they are put on to market they are generally contained in a receptacle, in particular in a can. They could however also be contained in other receptacles or containers such as bags, jars, bottles, etc. The receptacle may contain various amounts of cysts, namely amounts of cysts varying for example between 0.01 and 50 kg, more particularly between 0.1 and 10 kg. In accordance with the present invention, the amount of cysts are preferably contained in the receptacle and are combined with an amount of one or more of the above described hatching enhancing compounds which contain at least one - (OH)C=C(OH)- structure. The amount of this hatching enhancing compound which is combined with the cysts is at least sufficient to introduce the above described amounts of said compounds in the hatching medium when adding the packaged cysts thereto in any density.

Preferably, the amount of said hatching enhancing compound combined with the amount of cysts is such that when the cysts are hatched in the presence of this amount of hatching enhancing compound in the hatching medium, the hatching percentage is at least equal to X % + 0.4 * (M-X) %, preferably at least equal to X% + 0.6 * (M-X) %, and most preferably substantially equal to M %. As explained already hereabove, M % is the maximum hatching percentage which can be achieved under the applied hatching conditions when introducing an optimal amount of the hatching enhancing compound or compounds in the hatching medium while X % is the hatching percentage under the same hatching conditions but without the addition of these compounds.

According to the invention, it has been found that the optimal amount of compounds which contain at least one -(OH)C=C(OH)-structure in the hatching medium is dependent from the density of cysts in the hatching medium. From the experiments carried out by the inventors it appears indeed that the concentration of the hatching enhancing compounds that was introduced in the hatching medium at a cyst density of 2g/l does not cause the same increase in the hatching percentage as when higher cyst densities (for example 6g/l) are used. This means that at a higher cyst density, a higher concentration of said compounds has to be achieved in order to obtain a same effect on the hatching percentage.

Since compounds which contain at least one -(OH)C=C(OH)- structure are more stable and water soluble than peroxides, it is easier to mix or coat them on the cysts in a homogeneous way so that when the cysts are incubated in the tanks either in a low (e.g. a density lower than 2g/L) or a high density (e.g.: a density higher than 2g/l, in particular even higher than 5g/l), the concentration of said compounds in the hatching medium increases with increasing cyst densities so that it is still at least equal to the minimum concentration needed to get a higher hatching percentage than when the said compound was not added to the cysts. Hydrogen peroxides or compounds that produce hydrogen peroxides were on the contrary mostly unstable and thus difficult to be adhered to the cysts. Mostly, these compounds had to be mixed with the cysts, which could lead especially when the cysts were added in high densities, to incorrect concentrations in the hatching medium.

In Figure 3, the advantage of coating the hatching enhancing compound or compounds on the cysts is visualized. Artemia cysts, including diapauzing cysts, were incubated in 1 litre cones under the same hatching conditions as described hereinabove for the example illustrated in Figure 1, but in different densities of 2g cysts per litre or more. To one series of cysts, EGCG was added to the hatching medium in a concentration of 20 ppm (20 mg/L) on the same moment when the cysts were incubated. When higher densities of cysts were used and the same amount of EGCG was introduced in the hatching medium, the amount of EGCG was not sufficient to increase the hatching to the maximum hatching percentage (see Figure 3).

In another series, the cysts having a moisture content of 7.5%, were coated with 8 mg EGCG per gram cysts (i.e. about 8.6 mg EGCG per gram cyst dry matter) and incubated in the hatching medium. At normal densities (2g/L), this coating gave a concentration of EGCG of 16 ppm (mg/L) in the hatching medium. When higher densities were used, the concentration became higher as well, showing the advantage of coating the compounds on the cysts. At a density of 4g cysts per litre, the concentration of EGCG was 32 ppm (8mg EGCG per g cyst x 4g cysts / litre = 32 mg EGCG per litre hatching medium). When the cysts were incubated in a density of 6g/L, the concentration became 48 mg EGCG per litre hatching medium and the hatching percentage remained in this example above 80%.

The hatching enhancing compound or compounds which contain at least one -(OH)C=C(OH)- structure that are combined with the amount of cysts, which are preferably contained in a receptacle, in particular in a can, are preferably combined with the cysts in an amount of at least 1 mg per gram cyst dry matter, preferably at least 2 mg/g cyst dry matter, more preferably at least 3 mg / g cyst dry matter and most preferably at least 5 mg / gram cyst dry matter. In practice cysts are never absolutely dry and consequently, depending on the water content of the cysts (which is typically less than 10%), the corresponding amount of said compounds per gram of practical cysts is somewhat smaller. In the present patent application, the density of the cysts in the hatching medium is however expressed, as usual, in grams of practical cysts (the water content of which is smaller than 10%) per litre hatching medium.

The hatching enhancing compounds that are combined with the cysts are preferably compounds of which said structure is a part of an aromatic substructure of said compound. These compounds are preferably selected from the group comprising polyphenols and / or flavonoids, particularly polyphenoles and/or flavonoids containing a catechol and / or a gallol structure.

In practise sometimes products comprising a mixture of more than one said compounds are combined with cysts in the package. Practical examples of such products are given here above.

When the amount of cysts is contained in a receptacle, the hatching enhancing compounds can be combined with the cysts contained in the receptacle by packing it in a separate packaging so that the receptacle containing the cysts and the packaging containing the hatching enhancing compound or compounds form a set which can be sold as such. Preferably, said hatching enhancing compound is jointly packaged with the cysts, for example fixed to the outside of the receptacle, containing of the cysts or contained together with the receptacle in a same packaging.

More preferably, however, the hatching enhancing compound or compounds are also contained in the receptacle. When a liquid solution is used, it may for example be contained in a glass or plastic vial or vials (bottle) and packed together with the cysts in the receptacle, in particular in a can. When use is made of a solid hatching enhancing compound, this compound may be mixed directly with the cysts either as a powder or a granulate or in a tablet or other solid shape. Of course, it can also be contained for example in capsules mixed with the cysts. Most preferably, the hatching enhancing compound or compounds are adhered or in other words coated onto the cysts. In this way, always the correct amount of hatching enhancer compound is added to the hatching medium, especially when only a portion of the cysts contained in the receptacle are introduced in the hatching medium.

### References :

Pietta, P-G. Reviews: flavonoids as antioxidants. (2000) in: J.Nat. Prod. Vol. 63, p 1035-1042.
Van Stappen, G. Introduction, biology and ecology of Artemia. (1996) in : Manual on the production and use of live food for aquaculture. Edited by Lavens, P. and Sorgeloos, P. Laboratory of Aquaculture and Artemia Reference Center, University of Ghent, Belgium, p. 79-136.

## Claims

1. A method for producing free swimming Artemia nauplii starting from an amount of cysts of one or more Artemia species, including diapauzing cysts, by incubating the cysts in a hatching medium under conditions allowing at least a portion of the cysts to hatch and to release free swimming nauplii **characterized in that** the cysts are brought in contact with at least one compound comprising at least one - C(OH)=C(OH)- structure to break diapause in at least a number of said diapauzing cysts in order to enable them to produce free swimming nauplii thereby increasing the hatching percentage of the incubated cysts from X % of the total number of full cysts when the cysts are not brought in contact with said compound to a hatching percentage higher than X % when they are brought in contact with said compound.

2. A method according to claim 1, **characterised in that** said compound is introduced in said hatching medium.

3. A method according to claim 2, **characterised in that** said compound is introduced in the hatching medium in an amount higher than 1 mg/l, in particular higher than 3 mg/l, more particularly higher than 5 mg/l and most particular higher than 10 mg/l.

4. A method according to any one of the claims 1 to 3, **characterised in that** the cysts comprise such an amount of diapauzing cysts that by introducing an optimal amount of said compound in the hatching medium, the hatching percentage can be increased from X % to a maximum hatching percentage of M % and said amount of said compound is selected to increase the hatching percentage from X % to a hatching percentage which is at least equal to X % + 0.4*(M - X) %, and preferably to a hatching percentage which is at least equal to X % + 0.6*(M - X) %.

5. A method according to any one of the claims 1 to 4,
**characterised in that** the -C(OH)=C(OH)- structure of said compound is a part of an aromatic substructure of the compound, said compound being preferably selected from the group comprising polyphenols and /or flavonoids, more preferably polyphenoles and/or flavonoids containing a catechol and / or a gallol structure.

6. A method according to any one of the claims 1 to 5, **characterised in that** said compound is introduced in the hatching medium less than 10 hours, preferably less than 8 hours, more preferably less than 6 hours and most preferably less than 5 hours after having started to incubate the cysts therein.

7. A method according to claim 6, **characterised in that** said compound is introduced substantially simultaneously with the cysts in the hatching medium, in particular by being mixed with the cysts and/or by being adhered or coated thereon.

8. A receptacle containing an amount of cysts of one or more Artemia species, which cysts are destined to be incubated in a hatching medium to produce free swimming nauplii and show a hatching percentage of X% of the total number of full cysts when they are hatched in the hatching medium in the absence of a compound comprising at least one -(OH)C=C(OH)- structure, **characterised in that** said receptacle further contains an amount of at least one compound which comprises at least one -(OH)C=C(OH)- structure, which amount is sufficient to increases the hatching percentage of said amount of cysts from X% to a hatching percentage higher than X% when this amount of said compound is introduced in the hatching medium.

9. A receptacle according to claim 8, **characterised in that** said amount of said compound comprises at least 1 mg / g cyst dry matter, preferably at least 2 mg / g cyst dry matter, more preferably at least 3 mg /g cyst dry matter and most preferably at least 5 mg /g cyst dry matter.

10. A receptacle according to claim 8 or 9, **characterised in that** said cysts comprise such an amount of diapauzing cysts that by introducing an optimal amount of said compound in the hatching medium, the hatching percentage can be increased from X% to a maximum hatching percentage of M % and said amount of said compound is such that when the amount of cysts are hatched in the presence thereof the hatching percentage is at least equal to X% + 0.4*(M - X) %, and preferably at least equal to X % + 0.6*(M - X) %.

11. A receptacle according to anyone of the claims 8 to 10, **characterised in that** the -(OH)C=C(OH)- structure of said compound is a part of an aromatic substructure of the compound, said compound being preferably selected from the group comprising polyphenols and / or flavonoids, more preferably polyphenoles and/ or flavonoids containing a catechol and / or a gallol structure.

12. A receptacle according to any one of the claims 8 to 11, **characterised in that** it contains said compound enclosed in a packaging separating this compound from the cysts.

13. A receptacle according to any one of the claims 8 to 11, **characterised in that** said compound is mixed with the cysts and/or adhered or coated thereto.

14. Use of a compound comprising at least one -C(OH)=C(OH)- structure to increase the hatching percentage of an amount of cysts of one or more Artemia species, more particularly of an amount of cysts comprising diapauzing cysts.

## Patentansprüche

1. Ein Verfahren zur Produktion frei schwimmender Artemia nauplii ausgehend von einer Menge von Zysten einer oder mehrerer Artemiaarten, einschließlich Diapausezysten, durch Inkubation der Zysten in einem Brutmedium unter Bedingungen, die zumindest einem Teil der Zysten das Schlüpfen und Freisetzen frei schwimmender Artemia nauplii erlauben, **dadurch gekennzeichnet, dass** die Zysten in Kontakt mit zumindest einer Verbindung gebracht werden, die zumindest eine -C(OH)=C(OH)- Struktur umfasst, um die Diapause in zumindest einer Anzahl der erwähnten Diapausezysten zu unterbrechen, um es ihnen zu ermöglichen, frei schwimmende nauplii zu produzieren und **dadurch** die Schlüpfrate der inkubierten Zysten von X % der Gesamtzahl voller Zysten, wenn die Zysten nicht in Kontakt mit der erwähnten Verbindung gebracht werden, auf eine Schlüpfrate höher als X % zu erhöhen, wenn sie in Kontakt mit der erwähnten Verbindung gebracht werden.

2. Ein Verfahren nach Anspruch 1, **dadurch gekennzeichnet, dass** die erwähnte Verbindung in das erwähnte Brutmedium eingebracht wird.

3. Ein Verfahren nach Anspruch 2, **dadurch gekennzeichnet, dass** die erwähnte Verbindung in einer Menge von mehr als 1 mg/l, insbesondere mehr als 3 mg/l, noch besser mehr als 5 mg/l und am besten mehr als 10 mg/l in das Brutmedium eingebracht wird.

4. Ein Verfahren nach irgendeinem der Ansprüche 1 bis 3, **dadurch gekennzeichnet, dass** die Zysten eine solche Menge an Diapausezysten umfassen, dass die Schlüpfrate durch Einbringung einer optimalen Menge der erwähnten Verbindung in das Brutmedium von X % auf eine maximale Schlüpfrate von M % erhöht werden kann und dass die erwähnte Menge der erwähnten Verbindung ausgewählt ist, um die Schlüpfrate von X % auf eine Schlüpfrate zu erhöhen, die zumindest gleich X % + 0,4*(M-X) % ist, und vorzugsweise auf eine Schlüpfrate, die zumindest gleich X % + 0,6*(M-X) % ist.

5. Ein Verfahren nach irgendeinem der Ansprüche 1 bis 4, **dadurch gekennzeichnet, dass** die -C(OH)=C(OH)- Struktur der erwähnten Verbindung ein Teil einer aromatischen Substruktur der Verbindung ist, wobei die erwähnte Verbindung vorzugsweise aus der Gruppe ausgewählt wird, die Polyphenole und/oder Flavonoide umfasst, noch besser Polyphenole und/oder Flavonoide, die eine Catechol- und/oder eine Gallolstruktur enthalten.

6. Ein Verfahren nach irgendeinem der Ansprüche 1 bis 5, **dadurch gekennzeichnet, dass** die erwähnte Verbindung weniger als 10 Stunden, vorzugsweise weniger als 8 Stunden, noch besser weniger als 6 Stunden und am besten weniger als 5 Stunden, nachdem die Inkubation der Zysten im Brutmedium begonnen wurde, in dieses Brutmedium eingebracht wird.

7. Ein Verfahren nach Anspruch 6, **dadurch gekennzeichnet, dass** die erwähnte Verbindung im Wesentlichen gleichzeitig mit den Zysten in das Brutmedium eingebracht wird, insbesondere indem sie mit den Zysten gemischt und oder damit verbunden wird oder die Zysten damit beschichtet werden.

8. Ein Behälter mit einer Menge von Zysten einer oder mehrerer Artemiaarten, wobei die Zysten in einem Brutmedium inkubiert werden sollen, um frei schwimmende nauplii zu produzieren, und eine Schlüpfrate von X % der Gesamtzahl voller Zysten aufweisen, wenn sie im Brutmedium in Abwesenheit einer Verbindung ausgebrütet werden, welche zumindest eine -C(OH)=C(OH)- Struktur umfasst, **dadurch gekennzeichnet, dass** der erwähnte Behälter ferner eine Menge von zumindest einer Verbindung enthält, welche zumindest eine -C(OH)=C(OH)- Struktur umfasst, wobei diese Menge ausreicht, um die Schlüpfrate der erwähnten Menge von Zysten von X % auf eine Schlüpfrate höher als X % zu steigern, wenn diese Menge der erwähnten Verbindung in das Brutmedium eingebracht wird.

9. Ein Behälter nach Anspruch 8, **dadurch gekennzeichnet, dass** die erwähnte Menge der erwähnten Verbindung mindestens 1 mg/g Zysten-Trockenmasse, vorzugsweise mindestens 2 mg/g Zysten-Trockenmasse, noch besser mindestens 3 mg/g Zysten-Trockenmasse und am besten mindestens 5 mg/g Zysten-Trockenmasse umfasst.

10. Ein Behälter nach Anspruch 8 oder 9, **dadurch gekennzeichnet, dass** die erwähnten Zysten eine solche Menge an Diapausezysten umfassen, dass die Schlüpfrate durch Einbringung einer optimalen Menge der erwähnten Verbindung in das Brutmedium von X % auf eine maximale Schlüpfrate von M % erhöht werden kann und dass die erwähnte Menge der erwähnten Verbindung so ist, dass die Schlüpfrate, wenn die Menge von Zysten in deren Anwesenheit ausgebrütet wird, zumindest gleich X % + 0,4*(M-X) %, und vorzugsweise zumindest gleich X % + 0,6*(M-X) % ist.

11. Ein Behälter nach irgendeinem der Ansprüche 8 bis 10, **dadurch gekennzeichnet, dass** die -C(OH)=C(OH)- Struktur der erwähnten Verbindung ein Teil einer aromatischen Substruktur der Verbindung ist, wobei die erwähnte Verbindung vorzugsweise aus der Gruppe ausgewählt wird, die Polyphenole und/oder Flavonoide umfasst, noch besser Polyphenole und/oder Flavonoide, die eine Catechol- und/oder eine Gallolstruktur enthalten.

12. Ein Behälter nach irgendeinem der Ansprüche 8 bis 11, **dadurch gekennzeichnet, dass** er die erwähnte Verbindung eingeschlossen in einer Verpackung enthält, die diese Verbindung von den Zysten trennt.

13. Ein Behälter nach irgendeinem der Ansprüche 8 bis 11, **dadurch gekennzeichnet, dass** die erwähnte Verbindung mit den Zysten gemischt und/oder damit verbunden wird oder die Zysten damit beschichtet werden.

14. Verwendung einer Verbindung, die zumindest eine -C(OH)=C(OH)- Struktur umfasst, um die Schlüpfrate einer Menge von Zysten einer oder mehrere Artemiaarten zu erhöhen, insbesondere einer Menge von Zysten, die Diapausezysten umfasst.

## Revendications

1. Procédé pour produire des Artemia nauplii nageant librement en partant d'une quantité de cystes d'un ou plusieurs espèces d'Artemia, comprenant des cystes en diapause, en incubant les cystes dans un milieu d'éclosion dans des conditions permettant à au moins une partie des cystes d'éclore et de libérer des nauplii nageant librement, **caractérisé en ce que** les cystes sont mis en contact avec au moins un composé comprenant au moins une structure -C(OH)=C(OH)- pour rompre la diapause dans au moins un nombre des cystes en diapause afin de leur permettre de produire des nauplii nageant librement, ce qui fait passer le pourcentage d'éclosion des cystes incubés de X % du nombre total de cystes complets quand les cystes ne sont pas mis en contact avec ledit composé à un pourcentage d'éclosion supérieur à X % quand ils sont mis en contact avec ledit composé.

2. Procédé selon la revendication 1, **caractérisé en ce que** ledit composé est introduit dans ledit milieu d'éclosion.

3. Procédé selon la revendication 2, **caractérisé en ce que** ledit composé est introduit dans le milieu d'éclosion dans une quantité supérieure à 1 mg/l, zen particulier supérieure à 3 mg / l, plus particulièrement supérieure à 5 mg/l, et le plus particulièrement supérieure à 10 mg/l.

4. Procédé selon l'une quelconque des revendications 1 à 3, **caractérisé en ce que** les cystes comprennent une telle quantité de cystes en diapause qu'en introduisant une quantité optimale dudit composé dans le milieu d'éclosion, on fait passer le pourcentage d'éclosion de X % à un pourcentage d'éclosion maximal de M % et on choisit ladite quantité dudit composé pour faire passer le pourcentage d'éclosion de X % à un pourcentage d'éclosion qui est au moins égal à X % + 0,4*(M - X) %, et de préférence à un pourcentage d'éclosion qui est au moins égal à X % + 0,6*(M - X) %,

5. Procédé selon l'une quelconque des revendications 1 à 4, **caractérisé en ce que** la structure -C(OH)=C(OH)- dudit composé fait partie d'une sous-structure aromatique du composé, ledit composé étant de préférence choisi dans le groupe comprenant des polyphénols et/ou des flavonoïdes, de préférence des polyphénols et/ou flavonoïdes contenant une structure de catéchol et/ou de gallol.

6. Procédé selon l'une quelconque des revendications 1 à 5, **caractérisé en ce que** ledit composé est introduit dans le milieu d'éclosion moins de 10 heures, de préférence moins de 8 heures, mieux encore moins de 6 heures et idéalement moins de 5 heures après avoir commencer à y avoir incubé les cystes.

7. Procédé selon la revendication 6, **caractérisé en ce que** ledit composé est introduit pratiquement en même temps que les cystes dans le milieu d'éclosion, en particulier en étant mélangé avec les cystes et/ou en étant collé ou enduit sur ceux-ci.

8. Récipient contenant une quantité de cystes d'une ou plusieurs espèces d'Artemia, lesquels cystes sont destinés à être incubés dans un milieu d'éclosion pour produire des nauplii nageant librement et présenter un pourcentage d'éclosion de X % du nombre total de cystes complets quand ils sont éclos dans le milieu d'éclosion en l'absence d'un composé comprenant au moins une structure -C(OH)=C(OH)-, **caractérisé en ce que** ledit récipient contient en outre une quantité d'au moins un composé qui comprend au moins une structure -C(OH)=C(OH)-laquelle quantité est suffisante pour faire passer le pourcentage d'éclosion de ladite quantité de cystes de X % à un pourcentage d'éclosion supérieur à X % quand cette quantité dudit composé est introduite dans le milieu d'éclosion.

9. Récipient selon la revendication 8, **caractérisé en ce que** ladite quantité dudit composé comprend au moins 1 mg / g de matière sèche de cyste, de préférence au moins 2 mg/g de matière sèche de cyste, mieux encore au moins 3 mg / g de matière sèche de cyste et idéalement au moins 5 mg / g de matière sèche de cyste.

10. Récipient selon la revendication 8 ou 9, **caractérisé en ce que** lesdits cystes comprennent une telle quantité de cystes en diapause qu'en introduisant une quantité optimale dudit composé dans le milieu d'éclosion, on peut faire passer le pourcentage d'éclosion de X % à un pourcentage d'éclosion maximal de M % et ladite quantité dudit composé est telle que, quand la quantité de cystes sont éclos en sa présence, le pourcentage d'éclosion est au moins égal à X % + 0,4*(M - X) %, et de préférence au moins égal à X % + 0,6*(M - X) %,

11. Récipient selon l'une quelconque des revendications 8 à 10, **caractérisé en ce que** la structure -C(OH)=C(OH)- dudit composé est une partie d'une sous-structure aromatique du composé, ledit composé étant de préférence choisi dans le groupe comprenant des polyphénols et/ou des flavonoïdes, de préférence des polyphénols et/ou flavonoïdes contenant une structure de catéchol et/ou de gallol.

12. Récipient selon l'une quelconque des revendications 8 à 11, **caractérisé en ce qu'**il contient ledit composé enfermé dans un emballage séparant ledit composé des cystes.

13. Récipient selon l'une quelconque des revendications 8 à 11, **caractérisé en ce que** ledit composé est mélangé avec les cystes et/ou collé ou enduit sur ceux-ci.

14. Utilisation d'un composé comprenant au moins une structure -C(OH)=C(OH)- pour augmenter le pourcentage d'éclosion d'une quantité de cystes d'une ou plusieurs espèces d'Artemia, plus particulièrement d'une quantité de cystes comprenant des cystes en diapause.
